# EUROPEAN PATENT SPECIFICATION

(11) **EP 1 519 304 B1**
(45) Date of publication and mention of the grant of the patent: **25.08.2010**
(21) Application number: 04023057.5
(22) Date of filing: 28.09.2004
(51) Int. Cl.: G06K 15/00, G06F 9/445

(54) **Firmware update using a dedicated cable**
Firmwareaktualisierung unter Verwendung von einem spezifischen Kabel
Mise a jour de microprogramme utilisant un cable specifique

(30) Priority: 29.09.2003 JP 2003336988
(43) Date of publication of application: 30.03.2005
(73) Proprietor: Brother Kogyo Kabushiki Kaisha, Nagoya-shi, Aichi-ken 467-8561 (JP)
(72) Inventor: Yamamoto, Tsuyoshi, Nagoya-shi Aichi-ken 467-8562 (JP); Yoshida, Naoki, Nagoya-shi Aichi-ken 467-8562 (JP); Tomomatsu, Yoshitsugu, Nagoya-shi Aichi-ken 467-8562 (JP); Niwa, Akihiko, Nagoya-shi Aichi-ken 467-8562 (JP)
(74) Representative: Hofer, Dorothea

(56) References cited:
- EP-A- 0 583 077
- US-A- 5 826 211
- PATENT ABSTRACTS OF JAPAN vol. 2002, no. 10, 10 October 2002 (2002-10-10) & JP 2002 166628 A (SEIKO EPSON CORP), 11 June 2002 (2002-06-11)
- PATENT ABSTRACTS OF JAPAN vol. 0133, no. 53 (P-913), 8 August 1989 (1989-08-08) & JP 1 112424 A (RICOH CO LTD), 1 May 1989 (1989-05-01)

## Description

### BACKGROUND OF THE INVENTION

### 1. Field of Invention

The present invention relates to an electronic apparatus including a computer, such, for example, as a printer.

### 2. Description of Related Art

Generally, in an electronic apparatus including a computer such as, for example, a printer, its program and data used by the included computer are stored in an unrewritable ROM or in a rewritable nonvolatile memory (for example, a flash memory, EEPROM or the like). To update the version of a program or data, or to introduce a new program for maintenance, for repair or the like, if the program or data is stored in a ROM in this kind of the electronic apparatus, a substrate on which the ROM is fixed needs to be replaced. On the other hand, in the case of an electronic apparatus in which a program and data are stored in a nonvolatile memory thereof, the program and data stored in the nonvolatile memory can be rewritten by connecting that electronic apparatus to a host computer, and transmitting a desired program or data to the electronic apparatus. For example, JP 1-112424 A discloses a method for updating the version of an incorporated program by transmitting a file from a host computer to a laser printer, determining whether or not the file data is a program present in the laser printer that receives the file, and if the file is a new program, storing it in a program area of its nonvolatile memory and executing it when desired.

According to the method by which the substrate is replaced, its procedure is complicated and according to the method by file transfer described in JP 1-112424 A, a special control to determine whether or not a transferred file is a program which should be stored in a program area is necessary.

Document EP 0583077 A1 discloses a pair of mobile communications handset terminals. A cable loom comprises a link, which has a further link line that connects an input terminal of one the handset terminals with an output terminal thereof. The presence of this link line leads to a changed voltage supply on two separate line connected to an AD converter which may thus detect the insertion of the cable loom. In response to that, a microprocessor closes a switch thereby increasing the voltage supply to a non-volatile memory such that a reprogramming mode can be entered.

Document JP 2002-166628 A1 discloses an inkjet printer, wherein its firmware stored in an EEPROM may be updated by providing a cartridge having a memory, in which the update is stored. Via an interface to the memory, the update is allowed to be written into the EEPROM after performing various judgment, version and support checks.

### SUMMARY OF THE INVENTION

The present invention has been made to address a problem that it is difficult to rewrite a program or data used by a computer incorporated in an electronic apparatus such as a printer. Accordingly, one object of the present invention is to provide an electronic apparatus in which changing over to a specific mode such as a mode for transmitting the program or data is enabled without carrying out any special work or control.

To address the problem, one aspect of the present invention provides a printing apparatus according to claim 1 and a method of controlling the same according to claim 12.

According to one aspect of the invention, the printing apparatus includes a memory medium that stores a rewritable control program, the predetermined mode may be a mode for rewriting the control program or data stored in the memory medium.

According to one aspect of the invention, the rewritable control program or data may be firmware for the printing apparatus.

The firmware that is stored in the internal memory medium of the printing apparatus may include both a control program and data to control the printing apparatus.

Because the printing apparatus of aspects of the present invention automatically changes the mode if it is determined that the cable connected to the connector is a dedicated cable, no special control for determining the kind of data transmitted through the cable is necessary.

If terminals are connected in the dedicated cable so that a signal corresponding to the kind of the cable is input to a cable type determining terminal in the connector, the printing apparatus can determine that it is the dedicated cable simply by connecting the cable to the connector.

The interface connector used ordinarily for connecting to an external apparatus may be used as a connector on which to connect the dedicated cable. Consequently, the mode selection can be carried out easily using an existing connector without preparing any special connector.

Further, the connector on which the dedicated cable is loaded may be provided on a substrate inside the printing apparatus. Consequently, the structure of the connector can be designed freely by preparing a connector on which a dedicated cable for mode selection is to be loaded.

Further, as a connector on which the dedicated cable is loaded, it is permissible to use an ordinarily prepared connector for transmitting data from the control portion to the internal device. Consequently, the mode can be changed over easily without preparing any special connector.

The connector used ordinarily for transmitting print data can be used as a connector to which the dedicated cable is connected, thereby necessitating no special reconstruction or the like of the printing apparatus.

Further, if the printing apparatus has a rewritable memory medium to store the control program or data, the operation mode of the printing apparatus can be changed to a dedicated mode for rewriting the control program or data by connecting the dedicated cable to the connector. By preparing the dedicated mode, the control program or data can be rewritten without any special control for determining the type of data to be input from the connector. Further, because the operation mode can be changed to the dedicated mode simply by connecting the dedicated cable to the connector, even an inexperienced user can execute the re-programming operation with few mistakes. Further, because this is a dedicated mode, even if a fault occurs during reception of the control program or data, it is possible to construct so as to enable rewriting of the control program or data without affecting other controls.

Further, because the operation mode of the printing apparatus is changed to the dedicated mode for rewriting the firmware by connecting the dedicated cable to the connector, the firmware can be rewritten easily. Consequently, no troublesome operation for changing the operation mode to the firmware rewriting dedicated mode is required, so that the newest firmware can be used easily.

### BRIEF DESCRIPTION OF THE DRAWINGS

Embodiments of the invention will be described in conjunction with the accompanying drawings in which:

FIG. 1 is a perspective view showing the appearance of a printing apparatus implementing aspects of the invention;

FIG. 2 is a perspective view showing a state in which the rear face cover of the FIG. 1 printing apparatus is removed as seen from the rear side;

FIG. 3 is a block diagram showing the electrical structure of the FIG. 1 printing apparatus;

FIG. 4 is a front view of a face of a dedicated cable to be connected to a serial connector of the FIG. 1 printing apparatus;

FIG. 5 is a connection diagram of terminals of the special cable that is usable with the invention; and

FIG. 6 is a flow chart showing the flow of mode changeover processing according to aspects of the invention.

### DETAILED DESCRIPTION OF EXEMPLARY EMBODIMENTS

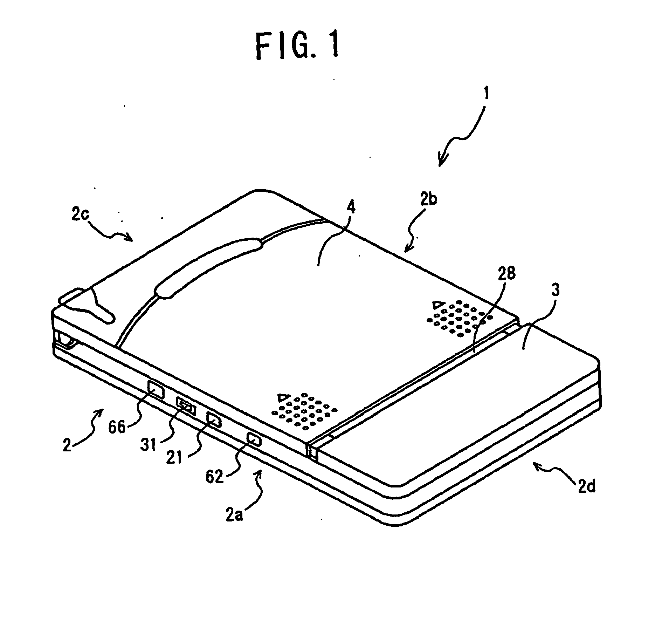

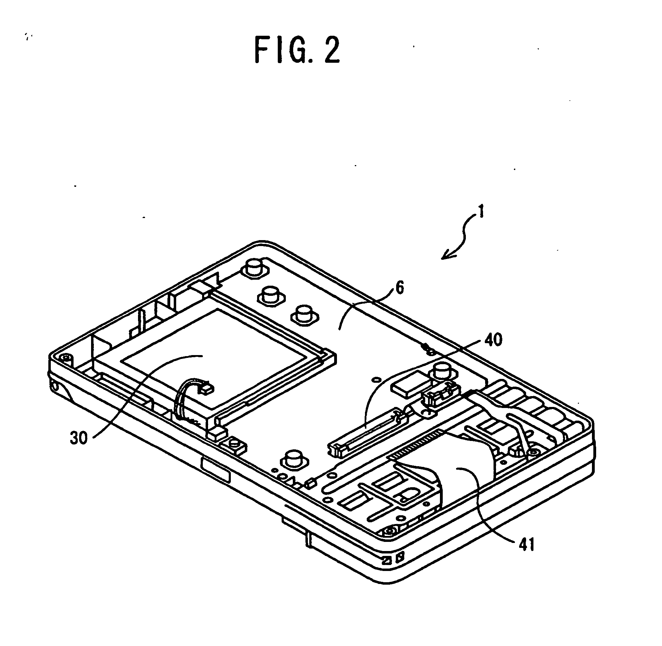

Embodiments of the present invention will be described with reference to the accompanying drawings. First, the structure of a printing apparatus 1 showing an example of an electronic apparatus implementing the present invention will be described with reference to FIGS. 1 and 2. FIG. 1 is a perspective view showing the appearance of the printing apparatus 1. FIG. 2 is a perspective view showing a state in which the rear face cover of the printing apparatus 1 is removed as seen from the rear side.

As shown in FIGS. 1 and 2, the main body case 2 of the printing apparatus 1 is substantially rectangular in its plan view, more specifically a substantially A6 size shape having a length of about 16 cm and a width of about 10 cm and a rectangular solid having a depth of about 2 cm. The main body case 2 has case side faces 2a, 2b, 2c, and 2d and various kinds of interfaces are disposed along the length direction of the case side face 2a. An AC adaptor connector 62 for receiving power, a serial connector 21 for executing serial communication with an external apparatus, a USB connector 31 for communicating with an external apparatus based on the USB standard, and a power switch 66 for turning ON/OFF the power of the printing apparatus 1 are provided on the case side face 2a in this order from the right side thereof.

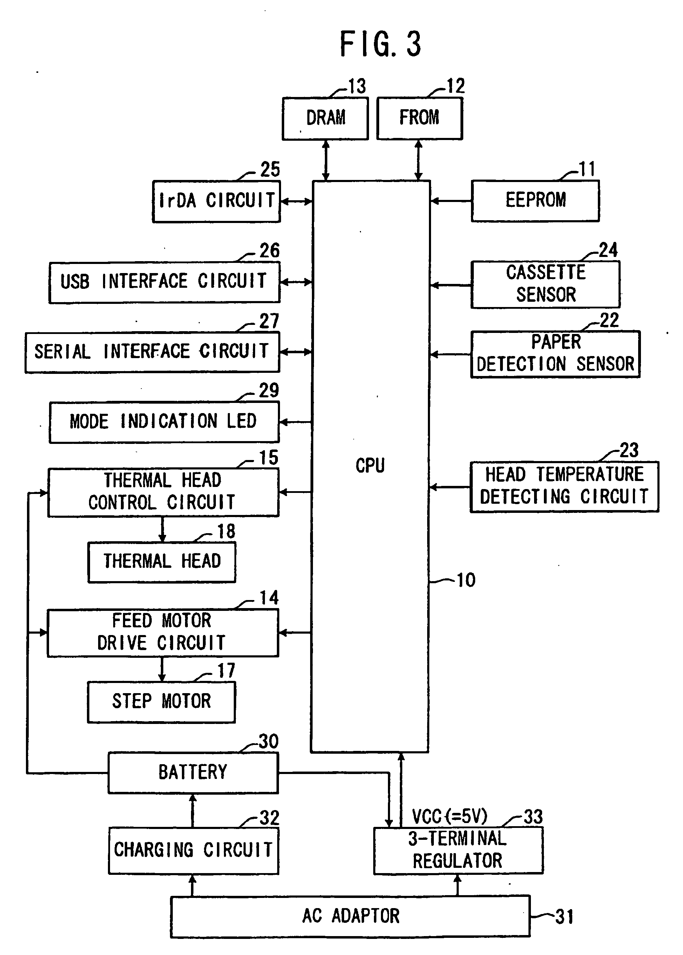

A substantially rectangular fixed cover 3 is provided on the top face near an end in the length direction of the main body case 2, occupying about 1/4 area in the top face of the main body. A printing mechanism portion having a paper feed roller for feeding paper (not shown), a thermal head 18 (see FIG. 3) which prints by heating and the like is provided inside the portion of the main body case 2 covered with the fixed cover 3. An accommodation portion (not shown) which accommodates paper to be printed is provided in a portion other than the portion under the fixed cover 3 of the top face of the main body case 2, and is covered with a case cover 4. A discharge port 28 for discharging a printed paper from the printing mechanism portion is provided between the fixed cover 3 and the case cover 4.

A control circuit board 6 (main substrate) having a CPU 10 (see FIG. 3) for controlling the printing apparatus 1, an internal connector 40 for transmitting/receiving print data, a DRAM 13, a FROM 12, an EEPROM 11 (see FIG. 3) and other various circuits, and a battery 30 for supplying power to the printing apparatus 1 are provided below the accommodation portion. The rear face of the main body case 2 is covered with a rear face cover (not shown), and by removing the rear face cover, the control circuit board 6, the internal connector 40 and a flat cable 41 can be accessed. The flat cable 41 is for transmitting print data from the CPU 10 to a thermal head 18, and is mounted to the internal connector 40.

To make the size of the printing apparatus 1 compact, the printing apparatus 1 utilizes the thermal head 18 as its printing head and thermal paper as a printing medium. The reason why the thermal head 18 is utilized as the printing head is that no reciprocating mechanism is required, unlike most ink jet type or ink ribbon type printing heads, thereby achieving reduction in size. Further, its economic efficiency is excellent because the only required consumption good is paper. As the thermal paper, a thermal color development type, which has a color development layer in which dye and developer chemically combine with each other when heated by the thermal head to develop a color, a thermal boring type in which a boring layer which is bored by heating is formed on a base layer thereof and the like are available. The invention, however, is applicable to other types of printers such as, for example, the above-noted ink jet printers, laser printers, etc.

Next, the electrical structure of the printing apparatus 1 will be described with reference to FIG. 3. FIG. 3 is a block diagram showing the electrical structure of the printing apparatus 1. The EEPROM 11, FROM 12, and DRAM 13 are connected to the CPU 10 that controls the printing apparatus 1. The EEPROM 11 stores model information, production number, count information of print number, and maintenance information such as information specific to an individual printing apparatus 1. The FROM 12 stores control programs and data used for printing such as character data and graphic data, and if the operation mode is changed to rewrite mode by connecting a dedicated cable 42, as described later, the contents of the control program and data stored in the FROM 12 can be rewritten. Further, data values which occur during arithmetic operations are stored temporarily in the DRAM 13.

The printing mechanism portion of the printing apparatus 1 includes a step motor 17 that feeds paper, a thermal head 18 that prints by heating, a feed motor drive circuit 14 that drives the step motor 17 and a thermal head control circuit 15 that controls the thermal head 18. The thermal head control circuit 15 and the feed motor drive circuit 14 are driven according to an instruction from the CPU 10 to execute printing.

Various kinds of sensors and detecting circuits such as a cassette sensor 24 that detects whether or not a paper cassette (not shown) is loaded, a paper detection sensor 22 that detects whether or not a thermal paper is located at printing position and a head temperature detecting circuit 23 that detects the temperature of the thermal head 18 are connected to the CPU 10 so that detection results are input thereto. Further, an IrDA circuit 25, a USB interface circuit 26 that achieves USB connection and a serial interface circuit 27 that executes serial connection are connected to the CPU 10 to execute communication with external apparatus through these components. A mode indication LED 29 is connected to the CPU 10 to indicate the mode of the printing apparatus 1 (e.g., printing, data writing, program rewriting, and the like) through an indication state or color, for example.

The printing apparatus 1 contains a battery 30 composed of a lithium ion battery which is rechargeable by a charging circuit 32 when connected to an AC adaptor 31, and this battery 30 supplies the printing apparatus 1 with power. The battery 30 is connected to the thermal head control circuit 15 and to the motor drive circuit 14 to supply power to these circuits, and further is connected to a three-terminal regulator 33. The voltage is regulated to 5V by the three-terminal regulator 33 and then supplied to the CPU 10.
Of course, the apparatus also could use a non-rechargeable battery.

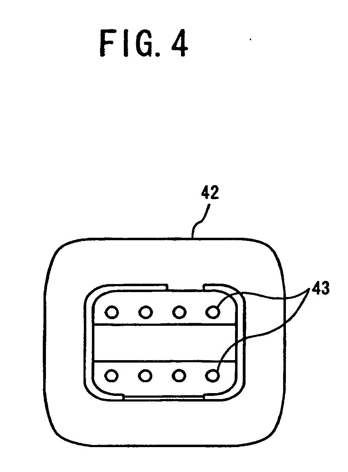

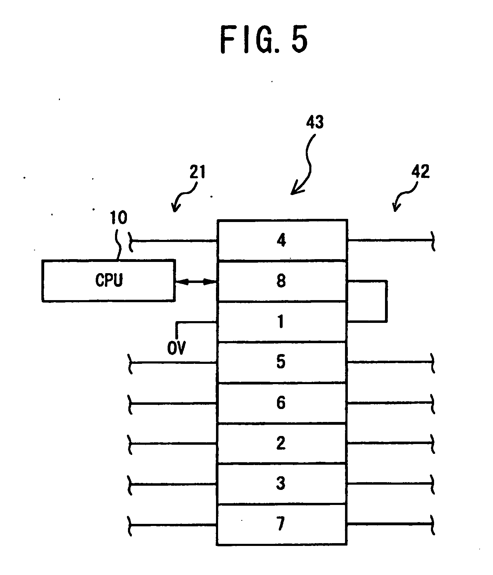

Next, the dedicated cable 42 to be connected to the serial connector 21 of this embodiment of the invention will be described with reference to FIGS. 4 and 5.

FIG. 4 is a front view of a face of a dedicated cable 42 to be connected to a serial connector 21. FIG. 5 is a schematic diagram showing a connection diagram of terminals 43 of the dedicated cable 42. In FIG. 5, the right side indicates the side of the dedicated cable 42 and the left side indicates the side of the serial connector 21.

As shown in FIG. 4, the dedicated cable 42 to be connected to the serial connector 21 is similar to a general purpose serial cable for transmitting print data from an external apparatus such as, for example, a personal computer, or any other portable information terminal, to the printing apparatus 1. The serial connector 21 has eight terminals for transmitting/receiving signals, and the dedicated cable 42 has eight terminals 43 corresponding to these terminals just like a general purpose serial cable.

When the general purpose serial cable is connected to the serial connector 21, of the eight terminals of the serial connector 21, six terminals are used for transmitting/receiving ordinary data such as print data. For example, if numbers 1-8 are allocated to the terminals as shown in FIG. 5, the terminals No. 2 - No.7 are used for transmitting/ receiving data. The remaining two terminals are not used for transmitting/receiving ordinary data, and remain as empty terminals. One of them is connected to the CPU 10 within the printing apparatus 1 (terminal No. 8 in FIG. 5) while the other is grounded (terminal No. 1 in FIG. 5). Thus, because the terminal No. 8 is not grounded when the ordinarily used general purpose serial cable is connected to the serial connector 21, a high level signal is input to the CPU 10. The terminals No. 1 and No. 8 can be considered to be redundant terminals because they are not used under normal conditions. These terminals also are not used for the transmission of data.

In the dedicated cable 42 of one embodiment of the invention, as shown in FIG. 5, terminals No. 1 and No. 8 are connected to each other in the dedicated cable 42. Thus, if the dedicated cable 42 is connected to the serial connector 21, the terminal No. 8 of the serial connector 21 is connected to the CPU 10 and the terminal No. 1 is grounded to 0V, so that 0V signal, that is, a low level signal is input into the CPU 10 through the terminal No. 8 from the terminal No. 1. When the dedicated cable 42 is so connected, the low level signal is input to the CPU 10, unlike when the ordinary general purpose cable is connected, so that the CPU 10 is capable of recognizing immediately that the dedicated cable 42 is connected. Therefore, mode selection is enabled according to a signal input from the terminal No. 8 of the serial connector 21. Hereinafter, the terminal No. 8 of the serial connector 21 will be called the mode selection terminal.

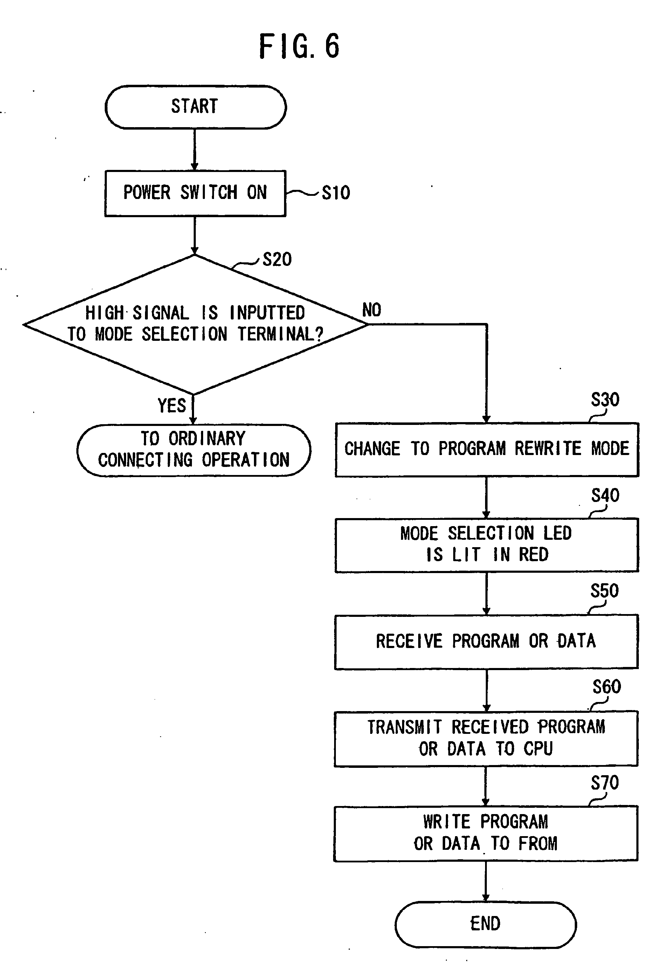

Next, the operation of the printing apparatus 1 having such a structure will be described with reference to FIG. 6. FIG. 6 is a flow chart showing the flow of mode selection processing. If, as shown in FIG. 6, the power switch is turned ON (S10), it is determined whether or not the high level signal is input to the mode selection terminal (terminal No. 8 in FIG. 5) (S20). If the high level signal is input to the mode selection terminal (S20: YES), it can be determined that the terminals No. 1 and No. 8 are connected with an ordinary cable and therefore printing is executed according to ordinary connecting action.

If the high level signal is not input to the mode selection terminal (S20: NO), then the appropriate terminal of the serial connector 21 is connected to the mode selection terminal within the cable, and therefore it can be determined that a dedicated cable having a structure according to this embodiment of the invention is connected. Then, the mode is changed to program rewrite mode (S30) and the mode selection LED is lit in red (S40). Next, a control program such as, for example, firmware or data such as character data and graphic data are received from an external apparatus (S50), and if the reception ends, that program or data is transmitted to the CPU 10 and written into the internal RAM of the CPU 10 (S60).
Next, instead of the previously stored control program and/or data, the newly downloaded program or data stored in the internal RAM is written into the FROM 12 (S70) and then the processing ends.

If terminals not used ordinarily in the dedicated cable 42 are connected to each other according to this embodiment, as described above, when the dedicated cable 42 is connected to the printing apparatus 1, and the printing apparatus 1 is powered ON, the low level signal is input to the CPU 10. Because usually the high level signal is input to this mode selection terminal, the CPU can determine immediately that the dedicated cable 42 is connected. Therefore, just after the cable is connected, it is possible to change the mode and execute download of data and/or program. Therefore, no special control of determining the kind of transmitted data and distinguishing from an ordinary action, such as reception of print data, is required. Further, because the mode selection is automatically carried out if the dedicated cable 42 is connected, even if any fault such as an operation interruption occurs during downloading of data and/or program, only a sequence of operations, namely, reception and write of data and/or program from the downloading, needs to be re-executed. Consequently, it is possible to avoid such a fault that normal version updating or reset is disabled as a result of a stoppage of the electronic apparatus during rewriting of the firmware.

According to this embodiment, in S20 of the flow chart shown in FIG. 6, the CPU 10 which determines whether or not an input signal to the mode selection terminal is high functions as determining means, and the CPU 10 which executes the mode selection processing in S30 functions as mode selection means.

Although according to this embodiment, the dedicated cable 42 to be connected to the serial connector 21 is used as the dedicated cable, the dedicated cable is not restricted to a serial cable. Rather, any kind of cable may be used as long as it has terminals usable for mode selection. For example, because the flat cable 41 and the internal connector 40 connecting the thermal head 18, which can be accessed when the rear face of the printing apparatus 1 is opened, are dedicated components of the printing apparatus 1 as shown in FIG. 2, they can be provided with dedicated terminals for mode selection.

For example, it also is permissible to execute processing of each mode by preparing a terminal capable of corresponding to plural modes in the internal connector 40 and then, preparing a dedicated cable meeting the kind of data write and program, rewrite and connecting to the internal connector 40.

In the illustrated embodiment, the controller (CPU 10) preferably is implemented using a suitably programmed general purpose computer, e.g., a microprocessor, microcontroller or other processor device (CPU or MPU). It will be appreciated by those skilled in the art, that the controller also can be implemented as a single special purpose integrated circuit (e.g., ASIC) having a main or central processor section for overall, system-level control, and separate sections dedicated to performing various different specific computations, functions and other processes under control of the central processor section. The controller also can be implemented using a plurality of separate dedicated or programmable integrated or other electronic circuits or devices (e.g., hardwired electronic or logic circuits such as discrete element circuits, or programmable logic devices such as PLDs, PLAs, PALs or the like). The controller also can be implemented using a suitably programmed general purpose computer in conjunction with one or more peripheral (e.g., integrated circuit) data and signal processing devices. In general, any device or assembly of devices on which a finite state machine capable of implementing the described procedures can be used as the controller of the invention.

## Claims

1. A printing apparatus (1) comprising:
a connector (40) for connecting a control module adapted to control the printing apparatus to a print head (18) provided inside the printing apparatus, and for transmitting print data for controlling the print head (18) ;
**characterized by**
the connector (40) being connectable to a cable for connecting between the printing apparatus and an external apparatus, and
the printing apparatus further comprising:
determining means for determining whether or not a cable connected to the connector (40) is a dedicated cable (42) used for a predetermined application; and
mode selecting means for, when the cable is determined to be the dedicated cable (42) by the determining means, changing over to a predetermined mode.

2. The printing apparatus according to claim 1, further comprising
a memory medium (12) that stores a rewritable control program and data,
wherein the predetermined mode is a mode for rewriting at least one of a control program and data in the memory medium (12).

3. The printing apparatus according to claim 2,
wherein at least one of the rewritable control program and the data is firmware for the printing-apparatus.

4. The printing apparatus according to one of claims 1 to 3,
wherein the determining means is adapted to determine whether or not the cable is the dedicated cable (42) according to a signal input to a redundant terminal of the connector.

5. The printing apparatus according to one of claims 1 to 4,
wherein the connector (40) is a connection interface to the external apparatus.

6. The printing apparatus according to one of claims 1 to 5, wherein the connector (40) is provided on a substrate (6) inside the printing apparatus.

7. The printing apparatus according to one of claims 1 to 6,
further comprising a memory medium (12) in the printing apparatus (1),
wherein the predetermined mode is a mode for storing at least one of a control program and data in the memory medium (12).

8. The printing apparatus according to claim 7,
wherein at least one of the storable control program and the data is firmware for the printing apparatus.

9. The printing apparatus according to one of claims 5 to 8,
wherein the determining means is adapted to determine that the cable is the dedicated cable when a signal provided on at least one terminal of the cable has a first value, and
is adapted to determine that the cable is not the dedicated cable when the signal provided on the at least one terminal of the cable has a second value that is different from the first value.

10. The printing apparatus (1) according to claim 1,
wherein
the connector (40) is connectable to the cable in order to connect the printing apparatus (1) with the external apparatus to which the cable is coupled; and
the determining means
is adapted to determine whether or not the cable connected to the connector (40) is a dedicated cable used for downloading at least one of a program and data; and
is adapted to automatically change to a downloading mode of operation when the cable is determined to be the dedicated cable.

11. A method of controlling a printing apparatus (1), the method comprising:
determining whether a connector of the printing apparatus (1) is connected to a cable which is adapted to connect the printing apparatus with an external apparatus to which the cable is coupled and is adapted to connect a print head (18) provided inside the printing apparatus (1) with a control module that is adapted to control the printing apparatus (1), wherein the connector (40) is adapted to transmit print data for controlling the print head (18);
determining whether or not the cable connected to the connector is a dedicated cable used for a predetermined application; and
automatically changing the electronic apparatus to a predetermined mode when the cable is determined to be the dedicated cauble.

12. The method according to claim 11,
wherein the step of determining whether or not the cable is the dedicated cable is performed based upon a signal input to a redundant terminal of the connector (40) from the cable.

13. The method according to claim 11 or 12,
wherein the connector (40) is used as a connection interface to the external apparatus.

14. The method according to one of claims 11 to 13,
wherein the connector (40) is used on a substrate (6) inside the printing apparatus.

15. The method according to one of claims 11 to 14,
wherein the electronic apparatus includes a memory medium (12), wherein the predetermined mode is a mode in which at least one of a control program and data is stored in the memory medium (12).

16. The method according to one of claims 11 to 15,
wherein the determining step determines that the cable is the dedicated cable when a signal provided on at least one terminal of the cable has a first value, and determines that the cable is not the dedicated cable when the signal provided on the at least one terminal of the cable has a second value that is different from the first value.

17. The method according to claim 11, comprising:
determining whether the connector (40) of the printing apparatus (1) is connected to the cable which connects the printing apparatus (1) with the external apparatus to which the cable is coupled;
determining whether or not the cable connected to the connector is a dedicated cable used for downloading at least one of a program and data; and
automatically changing the printing apparatus (1) to a downloading mode of operation when the cable is determined to be the dedicated cable.

## Patentansprüche

1. Ein Druckgerät (1), umfassend:
einen Verbinder (40) zum Verbinden eines Steuermoduls, das zum Steuern des Druckgeräts eingerichtet ist, mit einem Druckkopf (18), der innerhalb des Druckgeräts vorgesehen ist, und zum Übertragen von Druckdaten zum Steuern des Druckkopfs (18);
**dadurch gekennzeichnet, dass**
der Verbinder (40) mit einem Kabel verbindbar ist, um das Druckgerät mit einem externen Gerät zu verbinden, und
das Druckgerät ferner umfasst:
Bestimmungsmittel zum Bestimmen, ob ein Kabel, das mit dem Verbinder (40) verbunden ist, ein dediziertes Kabel (42) ist oder nicht, das für eine vorbestimmte Anwendung verwendet wird; und
Modusauswahlmittel zum Wechseln in einen vorbestimmten Modus, wenn durch das Bestimmungsmittel bestimmt wurde, dass das Kabel das dedizierte Kabel (42) ist.

2. Das Druckgerät gemäß Anspruch 1, ferner umfassend:
ein Speichermedium (12), welches ein überschreibbares Steuerprogramm und Daten speichert,
wobei der vorbestimmte Modus ein Modus zum Überschreiben von wenigstens einem aus dem Steuerprogramm und den Daten in dem Speichermedium (12) ist.

3. Das Druckgerät gemäß Anspruch 2,
wobei wenigstens eines aus dem überschreibbaren Steuerprogramm und den Daten eine Firmware für das Druckgerät ist.

4. Das Druckgerät gemäß einem der Ansprüche 1 bis 3,
wobei das Bestimmungsmittel gemäß einem Signal, das einem redundanten Anschluss des Verbinders zugeführt wird, zur Bestimmung eingerichtet ist, ob das Kabel das dedizierte Kabel (42) ist oder nicht.

5. Das Druckgerät gemäß einem der Ansprüche 1 bis 4,
wobei der Verbinder (40) eine Verbindungsschnittstelle zu dem externen Gerät ist.

6. Das Druckgerät gemäß einem der Ansprüche 1 bis 5, wobei der Verbinder (40) auf einem Substrat (6) innerhalb des Druckgeräts vorgesehen ist.

7. Das Druckgerät gemäß einem der Ansprüche 1 bis 6,
ferner umfassend ein Speichermedium (12) in dem Druckgerät (1),
wobei der vorbestimmte Modus ein Modus zum Speichern von wenigstens einem aus einem Kontrollprogramm und Daten in dem Speichermedium (12) ist.

8. Das Druckgerät gemäß Anspruch 7,
wobei wenigstens eines aus dem speicherfähigen Steuerprogramm und den Daten eine Firmware für das Druckgerät ist.

9. Das Druckgerät gemäß einem der Ansprüche 5 bis 8,
wobei das Bestimmungsmittel zur Bestimmung eingerichtet ist, dass das Kabel das dedizierte Kabel ist, wenn ein Signal, das an wenigstens einem Anschluss des Kabels geliefert wird, einen ersten Wert besitzt, und
zur Bestimmung eingerichtet ist, dass das Kabel nicht das dedizierte Kabel ist, wenn das Signal, das an dem wenigstens einen Anschluss des Kabels geliefert wird, einen zweiten Wert besitzt, welcher sich von dem ersten Wert unterscheidet.

10. Das Druckgerät (1) gemäß Anspruch 1, wobei
der Verbinder (40) mit dem Kabel verbindbar ist, um das Druckgerät (1) mit dem externen Gerät zu verbinden, mit welchem das Kabel verkoppelt ist; und
das Bestimmungsmittel
zur Bestimmung eingerichtet ist, ob das mit dem Verbinder (40) verbundene Kabel ein dediziertes Kabel ist oder nicht, das zum Herunterladen wenigstens eines aus einem Programm und Daten verwendet wird; und
zum automatischen Wechseln in einen Betriebsmodus des Herunterladens eingerichtet ist, wenn bei dem Kabel bestimmt wurde, dass es das dedizierte Kabel ist.

11. Ein Verfahren zum Steuern eines Druckgeräts (1), wobei das Verfahren umfaßt:
Bestimmen, ob ein Verbinder des Druckgeräts (1) mit einem Kabel verbunden ist, welches zum Verbinden des Druckgeräts mit einem externen Gerät eingerichtet ist, an welches das Kabel angekoppelt ist, und welches zum Verbinden eines Druckkopfs (18), der innerhalb des Druckgeräts (1) vorgesehen ist, mit einem Steuermodul eingerichtet ist, welches zum Steuern des Druckgeräts (1) eingerichtet ist, wobei der Verbinder (40) eingerichtet ist, Druckdaten zum Steuern des Druckkopfs (18) zu überträgen;
Bestimmen, ob das mit dem Verbinder verbundene Kabel ein dediziertes Kabel ist oder nicht, welches für eine vorbestimmte Anwendung verwendet wird; und
automatisches Versetzen des elektronischen Geräts in einen vorbestimmten Modus, wenn für das Kabel bestimmt wurde, dass es das dedizierte Kabel ist.

12. Das Verfahren gemäß Anspruch 11,
wobei der Schritt des Bestimmens, ob das Kabel das dedizierte Kabel ist oder nicht, auf Grundlage eines Signals durchgeführt wird, welches einem redundanten Anschluss des Verbinders (40) von dem Kabel geliefert wird.

13. Das Verfahren gemäß Anspruch 11 oder 12,
wobei der Verbinder (40) als eine Verbindungsschnittstelle zu dem externen Gerät verwendet wird.

14. Das Verfahren gemäß einem der Ansprüche 11 bis 13,
wobei der Verbinder (40) auf einem Substrat (6) innerhalb des Druckgeräts verwendet wird.

15. Das Verfahren gemäß einem der Ansprüche 11 bis 14,
wobei das elektronische Gerät ein Speichermedium (12) aufweist, wobei der vorbestimmte Modus ein Modus ist, in welchem zumindest eines aus einem Steuerprogramm und Daten in dem Speichermedium (12) gespeichert wird.

16. Das Verfahren gemäß einem der Ansprüche 11 bis 15,
wobei der Bestimmungsschritt bestimmt, dass das Kabel das dedizierte Kabel ist, wenn ein Signal, das zumindest einem Anschluss des Kabels geliefert wird, einen ersten Wert besitzt, und ferner bestimmt, dass das Kabel nicht das dedizierte Kabel ist, wenn das an dem wenigstens einen Anschluss des Kabels gelieferte Signal einen zweiten Wert besitzt, welcher verschieden von dem ersten Wert ist.

17. Das Verfahren gemäß Anspruch 11, umfassend:
Bestimmen, ob der Verbinder (40) des Druckgeräts (1) mit dem Kabel verbunden ist, welches das Druckgerät (1) mit dem externen Gerät verbindet, an welchem das Kabel angekoppelt ist;
Bestimmen, ob das mit dem Verbinder verbundene Kabel ein dediziertes Kabel ist oder nicht, das zum Herunterladen wenigstens eines aus einem Programm und Daten verwendet wird; und
automatisches Versetzen des Druckgeräts (1) in einen Betriebsmodus des Herunterladens, wenn für das Kabel bestimmt wurde, dass es das dedizierte Kabel ist.

## Revendications

1. Appareil d'impression (1) comprenant :
un connecteur (40) pour raccorder un module de commande adapté à commander l'appareil d'impression par rapport à une tête d'impression (18) prévue à l'intérieur de l'appareil d'impression, et pour transmettre des données d'impression pour commander la tête d'impression (18) ;
**caractérisé en ce que**
le connecteur (40) peut être raccordé à un câble pour le raccordement entre l'appareil d'impression et un appareil externe et **en ce que**
l'appareil d'impression comprend en outre :
des moyens de détermination pour déterminer si un câble raccordé au connecteur (40) est un câble dédié (42) utilisé pour une application prédéterminée ou pas ; et
des moyens de sélection de mode pour, lorsque le câble est déterminé pour être le câble dédié (42) par les moyens de détermination, passer à un mode prédéterminé.

2. Appareil d'impression selon la revendication 1, comprenant en outre :
un support de mémoire (12) qui stocke un programme de commande et des données réinscriptibles,
dans lequel le mode prédéterminé est un mode pour réécrire au moins l'un parmi un programme de commande et des données dans le support de mémoire (12).

3. Appareil d'impression selon la revendication 2, dans lequel au moins l'un parmi le programme de commande réinscriptible et les données est un micrologiciel pour l'appareil d'impression.

4. Appareil d'impression selon l'une quelconque des revendications 1 à 3, dans lequel les moyens de détermination sont adaptés à déterminer si le câble est le câble dédié (42) selon une entrée de signal dans une borne redondante du connecteur ou pas.

5. Appareil d'impression selon l'une quelconque des revendications 1 à 4, dans lequel le connecteur (40) est une interface de raccordement à l'appareil externe.

6. Appareil d'impression selon l'une quelconque des revendications 1 à 5, dans lequel le connecteur (40) est prévu sur un substrat (6) à l'intérieur de l'appareil d'impression.

7. Appareil d'impression selon l'une quelconque des revendications 1 à 6, comprenant en outre un support de mémoire (12) dans l'appareil électronique (1),
dans lequel le mode prédéterminé est un mode pour stocker au moins l'un parmi un programme de commande et des données dans le support de mémoire (12).

8. Appareil d'impression selon la revendication 7, dans lequel au moins l'un parmi le programme de commande mémorisable et les données est un micrologiciel pour l'appareil d'impression.

9. Appareil d'impression selon l'une quelconque des revendications 5 à 8 :
dans lequel les moyens de détermination sont adaptés à déterminer que le câble est le câble dédié lorsqu'un signal fourni sur au moins une borne du câble a une première valeur, et
sont adaptés à déterminer que le câble n'est pas le câble dédié lorsque le signal fourni sur la au moins une borne du câble a une seconde valeur qui est différente de la première valeur.

10. Appareil d'impression (1) selon la revendication 1, dans lequel :
le connecteur (40) peut être raccordé au câble afin de raccorder l'appareil d'impression (1) avec l'appareil externe auquel le câble est couplé ; et
les moyens de détermination
sont adaptés à déterminer si le câble raccordé au connecteur (40) est un câble dédié utilisé pour télécharger au moins l'un parmi un programme ou des données, ou pas ; et
sont adaptés à passer automatiquement à un mode de fonctionnement de téléchargement lorsque le câble est déterminé pour être le câble dédié.

11. Procédé pour commander un appareil d'impression (1), le procédé comprenant les étapes consistant à :
déterminer si un connecteur de l'appareil d'impression (1) est raccordé à un câble qui est adapté à raccorder l'appareil d'impression avec un appareil externe auquel le câble est couplé et est adapté à raccorder une tête d'impression (18) prévue à l'intérieur de l'appareil d'impression (1) avec un module de commande qui est adapté à commander l'appareil d'impression (1), dans lequel le connecteur (40) est adapté à transmettre les données d'impression pour commander la tête d'impression (18) ;
déterminer si le câble raccordé au connecteur est un câble dédié utilisé pour une application prédéterminée ou pas ; et
faire passer automatiquement l'appareil électronique dans un mode prédéterminé lorsque le câble est déterminé pour être le câble dédié.

12. Procédé selon la revendication 11, dans lequel l'étape consistant à déterminer si le câble est le câble dédié ou pas, est réalisée en fonction d'une entrée de signal dans une borne redondante du connecteur (40) à partir du câble.

13. Procédé selon la revendication 11 ou 12, dans lequel le connecteur (40) est utilisé en tant qu'interface de raccordement à l'appareil externe.

14. Procédé selon l'une quelconque des revendications 11 à 13, dans lequel le connecteur (40) est utilisé sur un substrat (6) à l'intérieur de l'appareil d'impression.

15. Procédé selon l'une quelconque des revendications 11 à 14, dans lequel l'appareil électronique comprend un support de mémoire (12), dans lequel le mode prédéterminé est un mode dans lequel au moins l'un parmi un programme de commande et des données est stocké dans le support de mémoire (12).

16. Procédé selon l'une quelconque des revendications 11 à 15, dans lequel l'étape de détermination détermine que le câble est le câble dédié lorsqu'un signal fourni sur au moins une borne du câble a une première valeur et détermine que le câble n'est pas le câble dédié lorsque le signal fourni sur la au moins une borne du câble a une seconde valeur qui est différente de la première valeur.

17. Procédé selon la revendication 11, comprenant les étapes consistant à :
déterminer si le connecteur (40) de l'appareil d'impression (1) est raccordé au câble qui raccorde l'appareil d'impression (1) avec l'appareil externe auquel le câble est couplé ;
déterminer si le câble raccordé au connecteur est un câble dédié utilisé pour le téléchargement d'au moins l'un parmi un programme et des données ou pas ; et
faire passer automatiquement l'appareil d'impression (1) dans un mode de fonctionnement de téléchargement lorsque le câble est déterminé pour être le câble dédié.
